# EUROPEAN PATENT APPLICATION

(11) **EP 4 686 433 A1**
(43) Date of publication of application: **04.02.2026**
(21) Application number: 25192600.2
(22) Date of filing: 29.07.2025
(51) Int. Cl.: A47B 96/20, B29C 48/00, B29C 63/00, C08L 3/02, A47B 13/08, A47B 95/04, B29L 31/44

(54) **STARCH FURNITURE EDGING TAPE FOR VENEERING NARROW PLANES OF FURNITURE ELEMENTS MADE OF WOOD-BASED BOARD**

(30) Priority: 30.07.2024 PL 44939524
(71) Applicant: Ecoedge Sp. z o.o., 16-300 Augustów (PL)
(72) Inventor: DOMANSKI, Piotr, 03-977 Warszawa (PL); MAMINSKI, Mariusz, 02-787 Warszawa (PL); PRZEOREK, Maciej, 06-400 Ciechanów (PL); JANCZYK, Rafal, 25-150 Kielce (PL); DANECKI, Leszek, 89-650 Czersk (PL)
(74) Representative: BRANDPAT Patent and Trademark Attorneys Chlebicka Czyz Ziolkowski Professional Partnership

(57) **Abstract**

The subject of the invention is a starch furniture edging tape for veneering narrow planes of furniture elements made of wood-based board. It is made by extrusion into the form of films or sheets of the desired thickness at a temperature of 120°C to 200°C from a mixture comprising thermoplastic starch with a melt flow rate (MFR) of 3 g/10 min to 40 g/10 min in the test according to ISO 1133 (190°C / 2.16 kg) in the amount of 50% to 100% by volume (1) or a mixture of thermoplastic starch and wood dust from hardwood or coniferous wood in an amount from 1% by volume to 50% by volume (2), most preferably 10% by volume and/or plasticizers and lubricants of plant origin in an amount from 2% by volume to 15% by volume.

The starch furniture edging tape, according to the invention, is characterized by a thickness of 0.8 mm to 4.0 mm and a width of 19 mm to 43 mm, and its surface is smooth or profiled by calendering. Dyeing in the cake during extrusion gives the edging an additional decorative effect. It is possible to make a print on the starch edging.

## Description

### Technical field

The subject of the present invention is a starch furniture edging tape for veneering narrow planes of furniture elements made of wood-based board in which the basic substance is a thermoplastic starch.

### Background art

In the furniture industry, traditional edging tapes made of synthetic materials such as polyvinyl chloride (PVC), acrylonitrile butadiene styrene copolymer (ABS) or polypropylene (PP) are most commonly used for finishing narrow planes of furniture elements made of wood-based boards such as chipboard, MDF or HDF. Their main task is to protect the edges of furniture against mechanical damage and moisture, while also providing an aesthetically pleasing appearance.

These synthetic materials are:
- PVC - polyvinyl chloride - is a synthetic polymer of petroleum origin, which is characterized by good flexibility and resistance to damage, is resistant to moisture, making it a good choice for use in kitchens and bathrooms.

PVC edgings are easy to process, allowing their use on surfaces with complex shapes. They are available in a wide range of colors and designs, including imitating wood, stone or metal.

PVC edging tapes are typically a cheaper material than ABS and exhibit high resistance to most household chemicals. They are easy to form and adapt to surfaces with different profiles. The softening point is in the range of 70°C to 80°C. PVC edgings have a tensile strength in the range of 20 MPa to 40 MPa.

The main disadvantage of PVC is the environmental hazard: PVC is less eco-friendly in production and disposal than ABS. It emits hydrogen chloride gas in the event of a fire. Due to the chlorine content, special process conditions are required for thermal disposal. PVC is not biodegradable.
- ABS - acrylonitrile butadiene styrene - is a synthetic copolymer obtained from petroleum derivatives. The material is safe for human health, non-toxic.

However, it is a synthetic material that can be recycled and processed without losing its physical properties. The material is not biodegradable. The edgings made of ABS are characterized by high strength and durability. They are resistant to impact and scratches, which makes it a good material in furniture exposed to heavy use. ABS edgings are characterized by a tensile strength of about 35 MPa to 45 MPa. The softening point is in the range of 95-105°C. The edgings have better resistance to UV radiation than PVC, which means that the colors and patterns remain unchanged for longer. ABS is more environmentally friendly in both production and disposal as it does not comprise chlorine. However, under fire conditions, it releases harmful vinyl compounds. It has high resistance to mechanical and chemical damage. ABS is usually more expensive than PVC. It can be more difficult to process than PVC, especially for more complex shapes. It is not biodegradable.
- Polypropylene (PP) is a lightweight but durable petroleum-based material, resistant to many chemicals and moisture. PP is known for its good flexibility and mechanical durability. PP edgings are resistant to moisture, making them suitable for use in places exposed to water, such as kitchens and bathrooms. They are also resistant to chemical agents, which increases their durability and longevity in everyday use. This material is characterized by good impact resistance, which protects the edges of furniture against mechanical damage. Compared to PVC and ABS edgings, polypropylene edgings are less harmful to the environment. They are easier to recycle and less harmful at the production stage. PP edgings are flexible and easy to process, allowing their use on edges with complex shapes, including curved surfaces. Polypropylene, depending on its chemical structure, has different temperature resistance compared to other plastics. Hence, the softening point is in the range of 110-150°C.

The disadvantage of PP edgings is the higher price compared to traditional PVC edgings. Although polypropylene (PP) is flexible, its processing may require specialized tools and techniques, especially for more complex edges. Tensile strength: 25-35 MPa.

The edging tape, in particular for furniture boards, known from the description of German patent specification DE 102013022086, comprises a hot melt layer consisting of at least one easily flowing polyolefin, and the flow characteristics of which can be controlled via a melt flow rate for the polyolefins used in the hot melt layer. It comprises a hot melt layer, wherein the hot melt layer comprises a thermoplastic polymer which is made of non-polar monomer units. Preferably, the thermoplastic polymer made of non-polar monomer units is an easily flowing polyolefin.

Furniture edgings made of thermoplastic polymeric materials, including ABS copolymer, are known. For example, EP 1852242 describes a technology for obtaining a trim board made of thermoplastic polymeric materials (PS, ABS, PP, PE, PC or PMMA) with a layer of hot melt adhesive (EVA, TPU) applied by co-extrusion. The trim board is made of polystyrene (e.g. ABS), polyvinylchloride (e.g. PVC-U), polyolefin (e.g. PP or PE), polycarbonate (PC) or polymethyl methacrylate (PMMA). The hot melt adhesive layer consists of a hot melt adhesive based on polyamide (PA), polyethylene (PE), amorphous polyalphaolefin (APAO), ethylene vinyl acetate copolymer (EVAC), polyester elastomer (TPE), polyurethane elastomer (TPU) or copolyamide elastomer (CoPa). The hot melt adhesive layer consists of a hot melt adhesive based on polyamide (PA), polyethylene (PE), amorphous polyalphaolefin (APAO), ethylene vinyl acetate copolymer (EVAC), polyester elastomer (TPE), polyurethane elastomer (TPU) or copolyamide elastomer (CoPa).

From the description of Polish patent Pat.229523, a polymer composition on the basis of an ABS copolymer is known, intended especially for the production of furniture edgings by the extrusion method, which consists of an ABS copolymer with a melt flow rate of 2 to 8 g/10 min, 15-30% by weight in relation to the amount of ABS, a halogen-free antipyrene, being a mixture of bisphenol A with high impact polystyrene, 0.1-2% by weight of a styrene copolymer with maleic anhydride with a maleic anhydride content of 0.3-0.6 mol% and 1-8% by weight of bentonite modified with dodecyldimethylbenzyl-ammonium chloride, obtained in the process of modifying the enriched bentonite in an 8 to 10% aqueous suspension at a maximum temperature of 70°C with dodecyldimethylbenzyl-ammonium chloride in the form of at least 30% solution in ethyl alcohol in an amount of 35-45 g/100 g of raw bentonite.

The subject of the Polish utility model Ru.066568 is an edging tape made of plastic, preferably PVC or ABS, having a cross-sectional shape of a flattened rectangle, the essence of which is that it consists of an inner core surrounded by a thin coating permanently linked to this core, wherein the outer front wall of the coating has a texture formed of shallow sockets-recesses situated next to each other, preferably with a profile similar to spherical cups, while the outer rear wall of the coating of this core is permanently linked to the layer of a dried solvent adhesive.

An edge trim for furniture described in EP2180995, among others, for chipboard and medium density fibreboard (MDF), consists of a hot melt layer comprising polar and non-polar parts in a molecular structure and a structural layer linked to the hot melt layer in a material fit, wherein the hot melt layer consists of laser pigments and dyeing materials. The hot melt layer is based on a material from which the structural layer is made. The structural layer and the hot melt layer are co-extruded. The hot melt layer material has a lower melting temperature than the structural layer. The edge trim for furniture, among others, chipboard and medium density fibreboard (MDF), consists of a hot melt layer comprising polar and non-polar parts in a molecular structure and a structural layer linked to the hot melt layer in a material fit, wherein the hot melt layer consists of laser pigments and dyeing materials. The hot melt layer is based on a material from which the structural layer is made. The structural layer and the hot melt layer are co-extruded. The hot melt layer material has a lower melting temperature than the structural layer material. The structural layer forms the top layer of the edge trim and defines the top side and/or the viewing side of the edge trim. The top side of the edge trim comprises decoration. The hot melt layer forms the bottom layer of the edge strip and defines the bottom side and/or the support side of the edge side. The structural layer and the hot melt layer have a thickness of 1-3 mm and 0.2-0.5 mm, respectively.

From the description of the European patent EP2366540, an edge strip made of a thermoplastic synthetic material with a multilayer structure for furniture boards is known, which consists of a top layer made of homopolypropylene and a co-extruded hot melt layer. The edging tape is placed over a highly fluidic hot melt layer in a molten state, wherein the hot melt layer has a comparable hardness and melting point with the next layer, such that the edging tape has a constant hardness and melting point. The thickness of the edge trim is 0.3-4 mm, and the visible upper side of the edge trim is embossed, printed and/or varnished and/or laminated with a plastic film. The edge trim made of a thermoplastic synthetic material with a multilayer structure for furniture boards consists of a top layer made of homopolypropylene and a co-extruded hot melt layer. The edging tape is placed over a highly fluidic hot melt layer in a molten state, wherein the hot melt layer has a comparable hardness and melting point with the next layer, such that the edging tape has a constant hardness and melting temperature. The thickness of the edge trim is 0.3-4 mm, and the visible upper side of the edge trim is embossed, printed and/or varnished and/or laminated with a plastic film or metal foil. The edging strip has grains obtained by coextrusion of the same polymers with different color settings or by heterogeneous distribution of dyes. The edging tape is produced in a two-layer or multi-layer manner by a co-extrusion method, wherein the co-extrusion of the hot melt layer is performed either in a process directly with the extrusion of the remaining layers, and/or by subsequent secondary extrusion and/or lamination of the hot melt layer in the form of a film on the remaining layers. The coextruded hot melt layer is based on a slightly flowing polymer having the same chemical basis, such as homopolypropylene with a melt flow rate of above 50 g/minute (according to ISO 1133, 230°C, 2.16 kg).

Known from the patent specification of EP2774744 an edging trim for coating narrow surfaces of board elements, in particular furniture boards, with at least one front top layer and a hot melt layer, which can be partially melted to fix the edging trim on the element, is characterized in that a water-proofing layer of a water-proofing agent or with a water-proofing agent is placed on the reverse side of the top layer being the back side of the hot melt layer, wherein the water-proofing layer comprises at least one polysiloxane, silane and/or isoalkane as a water-proofing agent.

However, there are no edgings made of renewable raw materials on the market that can be effectively biodegraded, which gives a huge market potential of the product according to the subject solution.

From patent description PL433862A1 (and EP3907054A1) at the same time there is known a method for producing thermoplastic starch by extruding a mixture of starch and plasticizer.

### Aim of the Invention

The aim of the invention is to make a furniture edging tape, used in the process of veneering narrow planes of furniture elements, taking into account the ecological aspects of development by replacing synthetic materials of mineral origin with a natural polymer, which will significantly reduce the risks for the environment and people, and also fits into the concept of circular economy, because at the end of the life cycle of furniture, the residue stream, i.e. recovered starch edgings, will be a raw material for another industrial process, for example for biotechnological transformation - fermentation, leading to the production of other valuable raw materials.

This goal was achieved by replacing synthetic materials with materials of natural origin in the form of thermoplastic starch.

### Disclosure of the Invention

Starch furniture edging tape for veneering narrow planes of furniture elements made of wood-based board, according to the invention, is made by extrusion into the form of films or sheets of the desired thickness at a temperature from 120°C to 200°C from a mixture comprising thermoplastic starch in the amount of 50% to 100% by volume or a mixture of thermoplastic starch and wood dust from hardwood or coniferous wood in an amount from 1% by volume to 50% by volume, most preferably 10% by volume, and/or plasticizers and lubricants of plant origin in an amount from 2% by volume to 15% by volume such as: linolenic acid, linoleic acid, oleic acid, stearic acid, polyglycerol, dibutyl sebacate or ethylene glycol distearate, glycerol lactate. The thermoplastic starch used has a melt flow rate (MFR) from 3 g/10 min to 40 g/10 min determined in the test according to ISO 1133 (190°C / 2.16 kg), in a plastometer enabling the measurement of the mass of the material flowing through a standard nozzle in 10 minutes under fixed conditions of pressure of 2.16 kg and temperature of 190°C, with an annealing time of 300 s.

In addition, the starch furniture edging tape, according to the invention, is characterized by a thickness of 0.8 mm to 4.0 mm and a width of 19 mm to 43 mm, and its surface is smooth or profiled by calendering. Dyeing in the cake during extrusion gives the edging an additional decorative effect. It is possible to make a print on the starch edging.

The subject of the invention is made of a new renewable material of plant origin and being distinguished by susceptibility to biodegradation under composting conditions, whereas it is characterized by functionality analogous to traditional edging tapes made of polyvinyl chloride (PVC) or acrylonitrile butadiene styrene (ABS) copolymer or polypropylene (PP), i.e. for finishing raw surfaces of laminated boards and worktops. The performance parameters of the tape are comparable to those of traditional edgings made of PVC, ABS or PP. Hardness determined according to ISO 2039-1 is in the range of 95-180 MPa, tensile strength from 36 MPa to 85 MPa, elongation at break from 1% to 7%, Young's modulus from 1550 MPa to 5140 MPa.

### Brief Description of Drawings

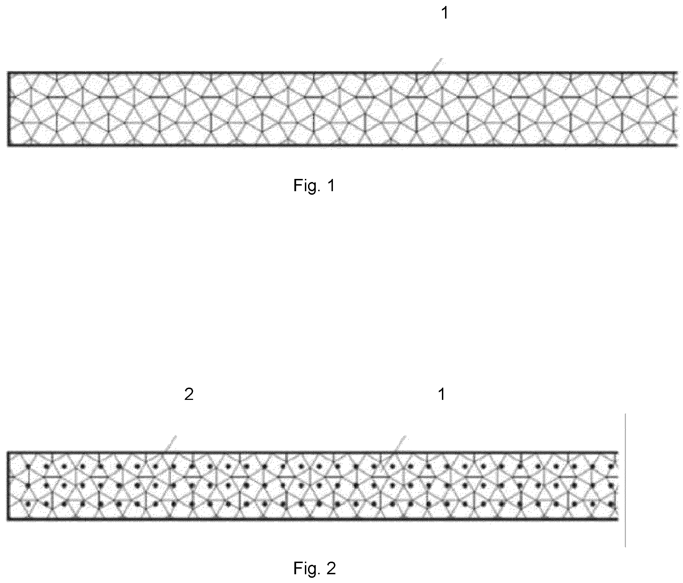

Starch furniture edging tape, according to the invention, is shown in the attached drawing, in which fig. 1 shows a single-layer edging made of thermoplastic starch 1, while fig. 2 shows a single-layer edging made of thermoplastic starch 1 with the addition of wood dust 2.

### Examples

The following examples show the properties of starch furniture edging tape for veneering narrow planes of furniture elements made of wood-based board made of thermoplastic starch and/or the addition of other substances.

### Example 1

Thermoplastic starch with a melt flow rate (MFR) of 3 g/10 min without the addition of wood dust - the product was extruded at 135 °C to form a sheet having a thickness of 0.80 mm, then cut into strips having a width of 19 mm. The determined mechanical properties of the product are as follows: tensile strength of 60 MPa, elongation at break of 4%, Young's modulus of 2750 MPa, hardness of 180 MPa, softening point of 68°C.

### Example 2

Thermoplastic starch with a melt flow rate (MFR) of 3 g/10 min without the addition of wood dust, with the addition of 1.5% by weight of glycerin lactate and 1.5% by weight of stearic acid (in relation to the whole) - the product was extruded at 125 °C to form a sheet having a thickness of 0.80 mm, it was cut into strips having a width of 19 mm. The determined mechanical properties of the product are as follows: tensile strength of 53 MPa, elongation at break of 3%, Young's modulus of 2200 MPa, hardness of 145 MPa, softening point of 54°C.

### Example 3

Thermoplastic starch with a melt flow rate (MFR) of 9 g/10 min with the addition of 15% by volume of wood dust and with the addition of 1.5% by weight of dibutyl sebacate and 1.5% by weight of ethylene glycol distearate (in relation to the whole) - the product was extruded at 160 °C to form a sheet having a thickness of 2.0 mm, cut into strips having a width of 19 mm. The determined mechanical properties of the product are as follows: tensile strength of 77 MPa, elongation at break of 5%, Young's modulus of 3550 MPa, hardness of 165 MPa, softening point of 77°C.

### Example 4

Thermoplastic starch with a melt flow rate (MFR) of 9 g/10 min with the addition of 15% by volume of wood dust and with the addition of 2.5% by weight of polyglycerol and 1.0% by weight of linolic acid (in relation to the whole) - the product was extruded at 175 °C to form a sheet having a thickness of 2.0 mm, cut into strips having a width of 43 mm. The determined mechanical properties of the product are as follows: tensile strength of 85 MPa, elongation at break of 4%, Young's modulus of 4100 MPa, hardness of 152 MPa, softening point of 84°C.

### Example 5

Thermoplastic starch with a melt flow rate (MFR) of 19 g/10 min with the addition of 30% by volume of wood dust and with the addition of 12% by weight of oleic acid (in relation to the whole) - the product was extruded at 170 °C to form a sheet having a thickness of 1.0 mm, cut into strips having a width of 43 mm. The determined mechanical properties of the product are as follows: tensile strength of 62 MPa, elongation at break of 7%, Young's modulus of 3800 MPa, hardness of 160 MPa, softening point of 72°C.

### Example 6

Thermoplastic starch with a melt flow rate (MFR) of 40 g/10 min with the addition of 50% by volume of wood dust and with the addition of 7.5% by weight of stearic acid and 7.5% by weight of ethylene glycol distearate (in relation to the whole) - the product was extruded at 160 °C to form a sheet having a thickness of 3.0 mm, cut into strips having a width of 43 mm. The determined mechanical properties of the product are as follows: tensile strength of 36 MPa, elongation at break of 2%, Young's modulus of 1550 MPa, hardness of 98 MPa, softening point of 60°C.

### Example 7

Thermoplastic starch with a melt flow rate (MFR) of 40 g/10 min without the addition of wood dust, with the addition of 7.5% by weight of linolic acid (in relation to the whole) - the product was extruded at 160 °C to form a sheet having a thickness of 4.0 mm, it was cut into strips having a width of 43 mm. The determined mechanical properties of the product are as follows: tensile strength of 61 MPa, elongation at break of 7%, Young's modulus of 1550 MPa, hardness of 95 MPa, softening point of 61°C.

### Example 8

Thermoplastic starch with a melt flow rate (MFR) of 30 g/10 min without the addition of wood dust, with the addition of 2% by weight of polyglycerol (in relation to the whole) was extruded at 165 °C to form a sheet having a thickness of 2.0 mm. The product has been cut into strips having a width of 33 mm. The determined mechanical properties of the product are as follows: tensile strength of 58 MPa, elongation at break of 6%, Young's modulus of 2200 MPa, hardness of 100 MPa, softening point of 66°C.

### Example 9

Thermoplastic starch with a melt flow rate (MFR) of 3 g/10 min with the addition of 10% by volume of wood dust, without plasticizer - the product was extruded at 200 °C to form a sheet having a thickness of 3.0 mm, cut into strips having a width of 33 mm. The determined mechanical properties of the product are as follows: tensile strength of 85 MPa, elongation at break of 2%, Young's modulus of 5140 MPa, hardness of 180 MPa, softening point of 111°C.

### Example 10

Thermoplastic starch with a melt flow rate (MFR) of 3 g/10 min without the addition of wood dust, with the addition of 7.5% by weight of dibutyl sebacate (in relation to the whole) - the product was extruded at 170 °C to form a sheet having a thickness of 3.0 mm, it was cut into strips having a width of 33 mm. The determined mechanical properties of the product are as follows: tensile strength of 80 MPa, elongation at break of 2%, Young's modulus of 4600 MPa, hardness of 150 MPa, softening point of 75°C.

## Claims

1. A starch furniture edging tape for veneering narrow planes of furniture elements made of wood-based board, made by extrusion into the form of films or sheets of the desired thickness, **characterized in that** it is extruded at a temperature of 120°C to 200°C from a mixture comprising thermoplastic starch (1) with a melt flow rate (MFR) of 3 g/10 min to 40 g/10 min in the amount of 50% to 100% by volume.

2. The starch furniture edging tape according to claim 1, **characterized in that** it is extruded from a mixture of thermoplastic starch (1) and wood dust (2) from hardwood or coniferous wood, wherein the wood dust constitutes up to 50% by volume of the total volume of the edging material, most preferably 10% by volume.

3. The starch furniture edging tape according to claim 1 or 2, **characterized in that** it comprises plasticizers and lubricants of plant origin in an amount from 2% by volume to 15% by volume, preferably selected from a group comprising: linolenic acid, linoleic acid, oleic acid, stearic acid, polyglycerol, dibutyl sebacate or ethylene glycol distearate, glycerol lactate.

4. The starch furniture edging tape according to claim 1 or 2, **characterized in that** it has a thickness of 0.8 mm to 4.0 mm and a width of 19 mm to 43 mm, and the surface is smooth or profiled by calendering.

5. The starch furniture edging tape according to claim 1 or 2, **characterized in that** it is dyed or it is not dyed in the cake during extrusion.

6. The starch furniture edging tape according to claim 1 or 2, **characterized in that** its surface is printed or is not printed.
